# EUROPEAN PATENT APPLICATION

(11) **EP 1 203 521 A1**
(43) Date of publication of application: **08.05.2002**
(21) Application number: 01204057.2
(22) Date of filing: 25.10.2001
(51) Int. Cl.: A01B 21/08, A01B 63/32

(54) **A device for soil preparation**

(30) Priority: 03.11.2000 NL 1016541
(71) Applicant: Lely Enterprises AG, 6300 ZUG (CH)
(72) Inventor: Hiddema, Joris Jan, 3142 LJ Maassluis (NL)
(74) Representative: Corten, Maurice Jean F.M.

(57) **Abstract**

A device for soil preparation. The device has a direction of movement during operation. The device comprises a carrier beam (1) for carrying disc-shaped bodies (2) extending parallel to each other. The angle of each disc-shaped body (2) relative to the carrier beam (1) is adjustable and lockable. Each disc-shaped body (2) is mounted on the carrier beam (1) by means of a ball joint (3).

## Description

The invention relates to a device for soil preparation according to the preamble of claim 1.

Such a device is known from EP-A-0 481 538. This known device comprises a frame with a plurality of pivotable, vertical axes that are pivotably disposed on the frame. Adjusting means are connected with the vertical axes for making the axes pivot collectively. As a result thereof the angle of each disc-shaped body relative to the carrier beam is adjustable and lockable. Each of the vertical axes is provided at its free end with a horizontal axis on which a disc-shaped body is rotatably mounted. The angle of inclination of the disc-shaped elements relative to the ground is adjustable by common adjustment of the angular position of the horizontal axis. Locking can take place by means of spindles or a combination of bolts and nuts. Such a construction is rather bulky, requires many parts, and is less suitable for carrying larger disc-shaped elements.

It is inter alia an object of the invention to provide a device for soil preparation, in which one or more of the above-mentioned drawbacks are at least partially obviated.

For that purpose a device of the above-described type according to the invention is characterized in that each disc-shaped element is mounted on the carrier beam by means of a ball joint. The use. of a ball joint enables to design the device as a compact one having few parts.

An embodiment of a device according to the invention comprises an axis of rotation, each ball joint and each disc-shaped element being provided with an at least substantially central aperture for receiving the axis of rotation. As a result thereof it is possible to use larger disc-shaped elements without problems.

The device is advantageously provided with an adjusting arm extending parallel to the axis of rotation, each ball joint being connected with the adjusting arm via a joint arm, and the adjusting arm being connected with the carrier beam via a first adjusting device. This makes it possible for the disc-shaped elements to carry out a collective pivotal movement in a simple manner, so that the angle of the disc-shaped elements relative to the carrier beam is adjustable. The joint arm is preferably curved.

An extremely compact construction is obtained when the first adjusting device has a direction of operation that is substantially parallel to the adjusting arm.

The optimal angle of inclination of the disc-shaped elements relative to the ground, also called scooping angle, depends on various conditions, such as type of soil, soil relief, etc. According to a preferred embodiment of a device according to the invention, the angle of inclination of each disc-shaped body relative to the ground is commonly adjustable and lockable as a result of the fact that the carrier beam is mounted so as to be upwardly pivotable.

An extremely stable device is obtained when the axis of rotation is connected with the carrier beam by means of axis-of-rotation-arms. The axis-of-rotation-arms ensure inter alia unloading of forces. The carrier beam is preferably upwardly pivotable by means of a second adjusting device.

A controlled upward pivotal movement of the carrier beam is preferably realized in that at the ends of the axis of rotation there is disposed a plate-shaped element, said plate-shaped element being provided with a slotted aperture for receiving the ends of the carrier beam.

Although the ball joint can be designed such that adjustment of the disc-shaped elements is possible in all directions, inter alia in consideration of the costs involved, each ball joint is preferably exclusively adapted for adjusting the angle of each disc-shaped body relative to the carrier beam.

For the purpose of further reducing the number of parts, the adjusting devices are preferably at the same time locking devices. Such adjusting devices may be constituted e.g. by hydraulic cylinders, although the invention is not limited thereto.

In a preferred embodiment of a device according to the invention at least one of the adjusting devices is controlled by a computer. This results inter alia in an increased accuracy as well as an increased security of the operation of the device, which can then be carried out with less manual actions on the machine itself.

A far-reaching automatic operation of the device controlled by the computer can be realized when the computer controls the adjusting devices on the basis of one or more of the following data:
- Data present in the memory of the computer, i.e. one or more data belonging to the group consisting of: map of the soil to be prepared, relief of the soil to be prepared, type of soil, cultivated crop, presence of weed, type of weed, and soil condition.
- Data regarding the speed. For that purpose the device is preferably provided with means for determining the speed of movement of the device, and for supplying data regarding the speed to the computer.
- Data regarding the position. For that purpose the device is preferably provided with means for determining the momentary position of the device, and with means for supplying data regarding the position to the computer. It is particularly advantageous when the means for determining the position are adapted for receiving GPS-data.

There are preferably provided measuring means for measuring the momentary position of at least one disc-shaped element, which measuring means can give an indication of the momentary position of the disc-shaped element. This indication can be passed to the operator of the device, who is able to compare whether the momentary position of the disc corresponds with the assumed adjusted position. As the adjustment of the position of the disc-shaped elements is a common adjustment, measurement of the momentary position of one disc-shaped element will suffice. Of course, it is also possible to measure the momentary position of several discs.

However, the measuring means advantageously pass the momentary position of the disc-shaped element to the computer. The latter may be provided with comparing means that compare the momentary position with the adjusted position. Upon deviation, the comparator can supply a signal warning the operator, or a signal controlling the first and/or second adjusting devices in such a manner that the inputted position is attained.

In a preferred embodiment of the device according to the invention there is provided a camera for observing the behaviour of the soil when it is thrown away by the disc-shaped elements. The computer is preferably provided with a programme for analysing the behaviour of the soil when it is thrown away observed by the camera. It has appeared that the behaviour of the soil when it is thrown away during operation of the device can give inter alia indications about the soil condition. By analysing this behaviour of the soil when it is thrown away, which can simply be observed visually, there can be obtained an indication about the operation. This indication can be used for adjusting the momentary operation of the device. Besides, the indication can be applied to future use, in particular when the indication is coupled with data regarding the position.

An embodiment of a device according to the invention is thus characterized in that, on the basis of the analysis result, the computer stores data for future control of the adjusting means, and/or the computer supplies signals for the momentary control of the adjusting means.

When the device is moved forward by a driving vehicle, this has the advantage that the device is provided with means for measuring the power respectively the torque of the driving vehicle during operation of the device, and for conveying the measurement data to the computer. The computer preferably controls future or momentary operation of the device on the basis of the measurement data in relation to the power respectively the torque. The power or torque of the driving vehicle appears to provide an indication for inter alia the soil condition, and the labour required for preparing the soil in a desired manner.

The invention will be illustrated hereinafter by way of example with reference to an embodiment shown in the drawing, in which:
Figures 1A, 1B and 1C are respectively a plan view, a bottom view and a side view of an embodiment of a device according to the invention, the disc-shaped elements being situated transversely to the carrier beam;
Figures 2A, 2B and 2C are respectively a plan view, a bottom view and a side view of an embodiment of a device according to the invention, the disc-shaped elements being at an angle relative to the carrier beam;
Figures 3A, 3B and 3C are respectively a plan view, a bottom view and a side view of an embodiment of a device according to the invention, the disc-shaped elements being both at an angle relative to the carrier beam and at an angle of inclination relative to the ground, and
Figure 4 is a schematic cross-sectional view in the region of a ball joint of a device according to the invention.

The invention relates to a device for soil preparation of the general type described in EP-A-0 482 538, also called disc harrow. Such a device is provided with a carrier beam 1 extending transversely to the direction of travel of the device. The carrier beam 1 carries disc-shaped elements 2 extending parallel to each other. The distance between the disc-shaped elements 2 amounts to e.g. 15 cm, while their diameter may amount to 50 cm or more.

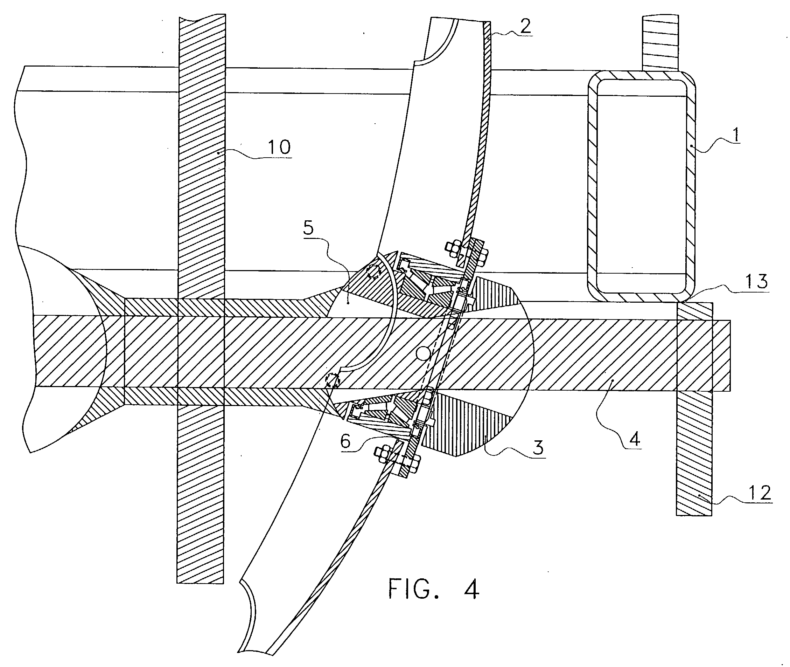

Each of the disc-shaped elements 2 is provided with an at least substantially centrally located ball joint 3. The ball joint 3 and the disc-shaped element 2 are preferably provided with an aperture 5 respectively 6 (Figure 4) adapted for receiving an axis of rotation 4. For adjusting and locking the angle of each disc-shaped body 2 relative to the carrier beam 1, there is provided an adjusting arm 7 extending parallel to the axis of rotation 4. Each ball joint 3 is connected with the adjusting arm 7 via a joint arm 8 which is preferably curved.

The adjusting arm 7 is connected with the carrier beam 1 via a first adjusting device 9. The first adjusting device 9 has a direction of operation that is substantially parallel to the adjusting arm 7. Thus there is obtained a compact construction. The adjusting device is preferably constituted by a hydraulic cylinder, so that it can also be used as a locking device for the adjusted position. Of course, other adjusting devices also having a locking function may be used as well. By controlling the first adjusting device 9 it is thus possible to adjust the angle of the disc-shaped elements 2 relative to the carrier beam 1.

Additionally, the angle of inclination of each disc-shaped element 2 relative to the ground can be adjustable and lockable, due to the fact that the carrier beam 1 is mounted so as to be upwardly pivotable. This is preferably realized by means of a second adjusting device 11 pivoting the carrier beam 1 upwards. For the purpose of unloading forces acting on the axis of rotation 4, the axis of rotation 4 is connected with the carrier beam 1 by means of axis-of-rotation-arms 10.

For the purpose of having carried out the upward pivotal movement of the carrier beam 1 in a controlled manner, there is disposed a plate-shaped element 12 at the ends of the axis of rotation 4. Said plate-shaped element 12 is provided with a slotted aperture 13 for receiving the ends of the carrier beam 1.

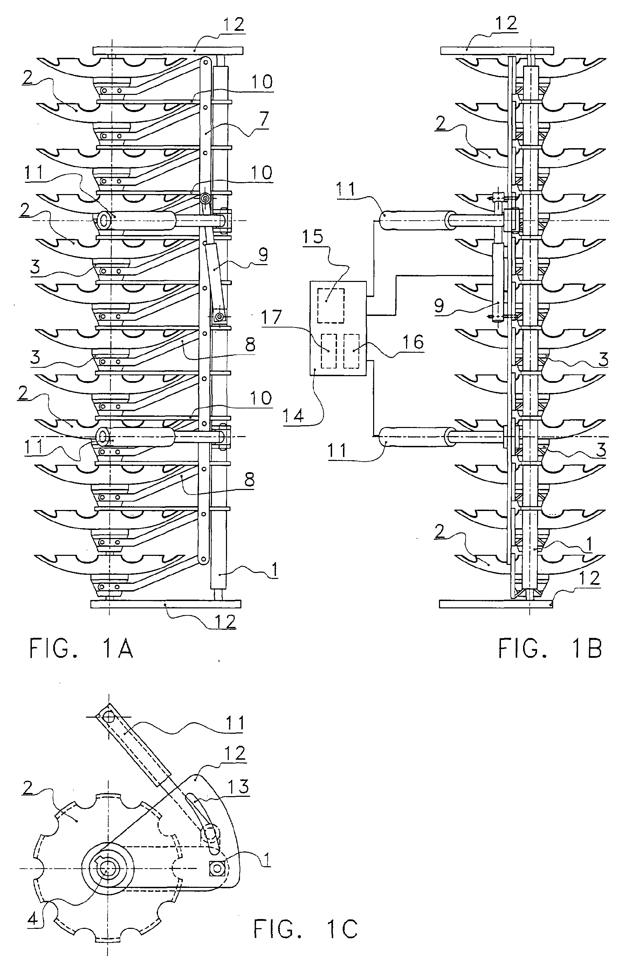

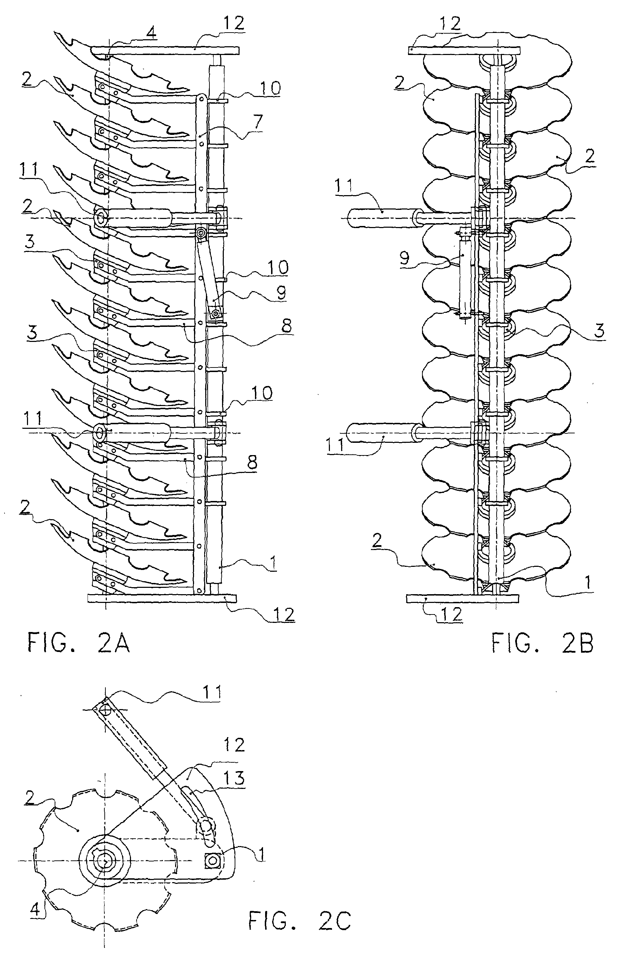

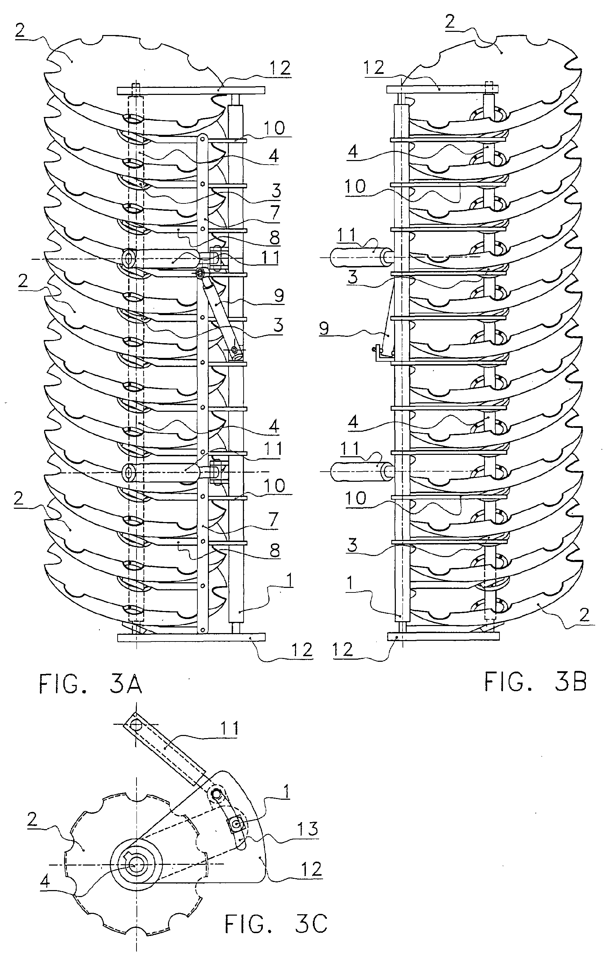

The various positions that can be assumed by the disc-shaped elements 2 of the device according to the invention are shown in Figures 1 through 3. Figures 1A, 1B and 1C show the position in which the disc-shaped elements are situated transversely to the carrier beam 1. Figures 2A, 2B and 2C show the position in which, by correct operation of the first adjusting device 9, the disc-shaped elements 2 are situated at an angle relative to the carrier beam 1. Figures 3A, 3B and 3C show the position in which, by correct operation of the second adjusting device 11, the disc-shaped elements 2 are also situated at an angle of inclination relative to the ground, in other words in which they are scooping.

As depicted in Figure 4, each ball joint 3, in the embodiment shown by dimensioning the aperture 5, is exclusively adapted for adjusting the angle of each disc-shaped body 2 relative to the carrier beam 1. Although the ball joint 3 can also be designed so as to allow adjustment of the angle of inclination, so not via lifting of the carrier beam 1, this would result in a disproportionately expensive ball joint, and in a complicated operation of the device.

It will be obvious that also the second adjusting device 11 can be at the same time a locking device.

For the purpose of obtaining a far-reaching automatic operation of the device, taking into account inter alia the soil condition (type, humidity and the like of the soil), the soil relief, the shape and size of the parcel to be prepared, the speed and position of the device relative to the parcel of ground to be prepared, at least one of the adjusting devices 9, 11 is controlled by a computer 14 which is schematically shown in Figure 1B.

The computer 14 is provided with a memory 15 for containing relevant data such as one or more data out of the group consisting of: map of the soil to be prepared, relief of the soil to be prepared, type of soil, cultivated crop, presence of weed, type of weed, and soil condition. The device comprises means 16 for determining the speed of movement of the device, and for supplying data regarding the speed to the computer 14.

Means 17 determine the momentary position of the device relative to the soil to be prepared, and supply data regarding the position to the computer 14. The means 17 for determining the position are in particular adapted for receiving GPS-data. The computer 14 is then able to control the adjusting devices 9, 11 on the basis of one or more of the above-mentioned data.

During operation of the known device it may occur that, in spite of locking of the adjusted position, the adjustment changes in an unwanted manner. According to an aspect of the invention, with the aid of measuring means for measuring the angle assumed by at least one of the disc-shaped elements 2, there can be given an indication of the momentary position of the disc-shaped elements 2. This indication can be passed to the operator of the device, who is able to compare whether the momentary position of the discs corresponds with the assumed adjusted position.

However, the measuring means advantageously pass the position to the computer 14. The latter can be provided with comparing means that compare the momentary position with the adjusted position. Upon deviation, the comparator can supply a signal warning the operator, or a signal controlling the adjusting devices 9, 11 in such a manner that the inputted position is attained.

In a preferred embodiment of the device according to the invention there is provided a camera for observing the behaviour of the soil when it is thrown away by the disc-shaped elements. The computer is preferably provided with a programme for analysing the behaviour of the soil when it is thrown away observed by the camera. It has appeared that the behaviour of the soil when it is thrown away during operation of the device can give inter alia indications about the soil condition. By analysing this behaviour of the soil when it is thrown away, which can simply be observed visually, there can be obtained an indication about the operation. This indication can be used for adjusting the momentary operation of the device. Besides, the indication can be applied to future use, in particular when the indication is coupled with data regarding the position.

An embodiment of a device according to the invention is thus characterized in that, on the basis of the analysis result, the computer stores data for future control of the adjusting means, and/or the computer supplies signals for the momentary control of the adjusting means.

When the device is moved forward by a driving vehicle, this has the advantage that the device is provided with means for measuring the power respectively the torque of the driving vehicle during operation of the device, and for conveying the measurement data to the computer. The computer preferably controls future or momentary operation of the device on the basis of the measurement data in relation to the power respectively the torque. The power or torque of the driving vehicle appears to provide an indication for inter alia the soil condition, and the labour required for preparing the soil in a desired manner.

## Claims

1. A device for soil preparation, said device having a direction of movement during operation, said device comprising a carrier beam (1) for carrying disc-shaped bodies (2) extending parallel to each other, the angle of each disc-shaped body (2) relative to the carrier beam (1) being adjustable and lockable, **characterized in that** each disc-shaped body (2) is mounted on the carrier beam (1) by means of a ball joint (3).

2. A device as claimed in claim 1, **characterized in that** the device is provided with an axis of rotation (4), and **in that** each ball joint (3) and each disc-shaped body (2) is provided with an at least substantially central aperture (5 respectively 6) for receiving the axis of rotation (4).

3. A device as claimed in claim 2, **characterized in that** the device is provided with an adjusting arm (7) extending parallel to the axis of rotation (4), each ball joint (3) being connected with the adjusting arm (7) via a joint arm (8), and **in that** the adjusting arm (7) is connected with the carrier beam (1) via a first adjusting device (9).

4. A device as claimed in claim 3, **characterized in that** the joint arm (8) is curved.

5. A device as claimed in claim 3 or 4, **characterized in that** the first adjusting device (9) has a direction of operation that is substantially parallel to the adjusting arm (7).

6. A device as claimed in any one of the preceding claims, **characterized in that** the angle of inclination of each disc-shaped element (2) relative to the ground is adjustable and lockable due to the fact that the carrier beam (1) is mounted so as to be upwardly pivotable.

7. A device as claimed in claim 6, with reference to claim 2, **characterized in that** the axis of rotation (4) is connected with the carrier beam (1) by means of axis-of-rotation-arms (10).

8. A device as claimed in claim 6 or 7, **characterized in that** the carrier beam (1) is upwardly pivotable by means of a second adjusting device (11).

9. A device as claimed in claim 7 or 8, **characterized in that** at the ends of the axis of rotation (4) there is disposed a plate-shaped element (12), said plate-shaped element (12) being provided with a slotted aperture (13) for receiving the ends of the carrier beam (1).

10. A device as claimed in claim 6, 7, 8 or 9, **characterized in that** each ball joint (3) is exclusively adapted for adjusting the angle of each disc-shaped body (2) relative to the carrier beam (1).

11. A device as claimed in claim 3 or 8, **characterized in that** the adjusting devices (9, 11) are at the same time locking devices.

12. A device as claimed in claim 3 or 8, **characterized in that** at least one of the adjusting devices (9, 11) is controlled by a computer (14).

13. A device as claimed in claim 12, **characterized in that** the computer (14) is provided with a memory (15) containing one or more data out of the group consisting of: map of the soil to be prepared, relief of the soil to be prepared, type of soil, cultivated crop, presence of weed, type of weed, and soil condition.

14. A device as claimed in claim 12 or 13, **characterized in that** the device is provided with means (16) for determining the speed of movement of the device, and for supplying data regarding the speed to the computer (14).

15. A device as claimed in claim 12, 13 or 14, **characterized in that** the device is provided with means (17) for determining the momentary position of the device, and with means for supplying data regarding the position to the computer (14).

16. A device as claimed in claim 15, **characterized in that** that the means (17) for determining the position are adapted for receiving GPS-data.

17. A device as claimed in claim 13, 14, 15 or 16, **characterized in that** the computer (14) controls the adjusting devices (9, 11) on the basis of one or more of the above-mentioned data.

18. A device as claimed in any one of the preceding claims, **characterized in that** the device comprises measuring means for measuring the momentary position of at least one disc-shaped element (2).

19. A device as claimed in claims 12 and 18, **characterized in that** the computer (14) comprises a comparing device for comparing the desired, i.e. the to be adjusted position of the disc-shaped elements with the momentary position as measured by the measuring means.

20. A device as claimed in claim 19, **characterized in that** the comparing device supplies a signal for controlling the adjusting devices (9, 11).

21. A device as claimed in any one of the preceding claims 12 through 20, **characterized in that** the device is provided with a camera for observing the behaviour of the soil when it is thrown away by the disc-shaped elements.

22. A device as claimed in claim 21, **characterized in that** the computer is provided with a programme for analysing the behaviour of the soil when it is thrown away observed by the camera.

23. A device as claimed in claim 22, **characterized in that**, on the basis of the analysis result, the computer stores data for future control of the adjusting means, and/or the computer supplies signals for the momentary control of the adjusting means.

24. A device as claimed in any one of the preceding claims 12 through 23, the device being moved forward by a driving vehicle, **characterized in that** the device is further provided with means for measuring the power respectively the torque of the driving vehicle during operation of the device, and for conveying the measurement data to the computer.

25. A device as claimed in claim 24, **characterized in that**, on the basis of measurement data in relation to the power respectively the torque, the computer controls future or momentary operation of the device.
